# EUROPÄISCHE PATENTSCHRIFT

(11) **EP 3 309 332 B1**
(45) Veröffentlichungstag und Bekanntmachung des Hinweises auf die Patenterteilung: **12.08.2020**
(21) Anmeldenummer: 17196753.2
(22) Anmeldetag: 17.10.2017
(51) Int. Cl.: E05B 79/20

(54) **BETÄTIGUNGSEINRICHTUNG**
ACTUATING DEVICE
ACTIONNEUR

(30) Priorität: 17.10.2016 DE 102016119721
(43) Veröffentlichungstag der Anmeldung: 18.04.2018
(73) Patentinhaber: Brose Schliesssysteme GmbH & Co. KG, 42369 Wuppertal (DE)
(72) Erfinder: OTTO, Andreas, 57080 Siegen (DE)
(74) Vertreter: Gottschald Patentanwälte Partnerschaft mbB

(56) Entgegenhaltungen:
- EP-A2- 0 950 939
- DE-A1- 19 504 301
- DE-A1-102011 120 188
- FR-A1- 2 971 536
- GB-A- 2 039 319
- US-A- 4 526 057

## Beschreibung

Die Erfindung betrifft eine Betätigungseinrichtung für eine Kraftfahrzeugtür gemäß dem Oberbegriff von Anspruch 1, eine Kraftfahrzeugtür gemäß Anspruch 14 sowie ein Verfahren zum Betätigen einer Betätigungseinrichtung gemäß Anspruch 15.

Betätigungseinrichtungen der in Rede stehenden Art können in verschiedenen Bereichen eines Kraftfahrzeugs Anwendung finden. Vorstehend steht eine Anwendung im Bereich einer Kraftfahrzeugtür im Vordergrund. Bei solchen Kraftfahrzeugtüren kann es sich beispielsweise um Schwenktüren, Schiebetüren, Flügeltüren, Klappen, insbesondere Heckklappen, Heckdeckel, Motorhauben, Laderaumböden o. dgl. eines Kraftfahrzeugs handeln.

Insbesondere in der DE 20 2011 002 760 U1 ist eine Betätigungseinrichtung im Rahmen einer Schiebetüranordnung eines Kraftfahrzeugs beschrieben. Die Schiebetür weist eine Betätigungseinrichtung mit einem Kraftfahrzeugschloss, einem Türgriff und einer Verteileinrichtung auf. Bei dieser werden Betätigungsbewegungen des Türgriffs durch die Verteileinrichtung zum Kraftfahrzeugschloss und einem Kraftfahrzeugnebenschloss verteilt, so dass mit einer Betätigungsbewegung des Türgriffs sowohl das Kraftfahrzeugschloss als auch das Nebenschloss geöffnet werden können.

Nachteilig an dieser Konstruktion ist, dass der Bediener über den gesamten Betätigungsweg die Rückstellkräfte des Kraftfahrzeugschlosses sowie des Nebenschlosses überwinden muss, um die Kraftfahrzeugtür zu öffnen. Dies führt zu relativ hohen aufzubringenden Betätigungskräften am Türgriff bzw. größeren Verstellwegen bei größer gewählten Übersetzungen. Zudem ist die Konstruktion verhältnismäßig aufwendig und damit auch teuer in der Herstellung.

Der Erfindung liegt also das Problem zugrunde, die bekannte Betätigungseinrichtung derart auszugestalten und weiterzubilden, dass der Bedienkomfort der Betätigungseinrichtung für den Benutzer auf einfache und kostengünstige Art und Weise gesteigert wird.

Das obige Problem wird bei einer Betätigungseinrichtung gemäß dem Oberbegriff von Anspruch 1 durch die Merkmale des Kennzeichens von Anspruch 1 gelöst.

Dadurch, dass im montierten Zustand der Betätigungseinrichtung auf einem ersten Abschnitt einer auf dem ersten Eingang der Verteileinrichtung wirkenden Betätigungsbewegung zur abschnittsweisen Übertragung der Betätigungsbewegung an die zweite Funktionseinheit der erste Eingang mit dem zweiten Ausgang gekoppelt ist oder gekoppelt wird, und, dass zu Beginn eines zweiten Abschnitts der Betätigungsbewegung der erste Eingang und der zweite Ausgang zur Unterbrechung der Übertragung der Betätigungsbewegung an die zweite Funktionseinheit entkoppelt werden, muss auf den zweiten Abschnitt der Betätigungsbewegung eine Rückstellkraft der zweiten Funktionseinheit nicht mehr überwunden werden, so dass die im zweiten Abschnitt der Betätigungsbewegung aufzubringende Kraft reduziert werden kann. Hierdurch wird der Bedienkomfort für den Benutzer erhöht.

Im montierten Zustand der Betätigungseinrichtung wird bzw. ist auf einem zweiten Abschnitt einer auf den ersten Eingang der Verteileinrichtung wirkenden Betätigungsbewegung zur abschnittsweisen Übertragung der Betätigungsbewegung an die erste Funktionseinheit der erste Eingang mit dem ersten Ausgang gekoppelt. Zusätzlich ist bzw. wird im montierten Zustand der Betätigungseinrichtung auf einem ersten Abschnitt einer auf dem ersten Eingang der Verteileinrichtung wirkenden Betätigungsbewegung zur abschnittsweisen Übertragung der Betätigungsbewegung an die erste Funktionseinheit der erste Eingang mit dem ersten Ausgang gekoppelt. Vorzugsweise sind der erste Eingang und der erste Ausgang fest gekoppelt. Die Abstimmung von Verteileinrichtung, der ersten Funktionseinheit und der zweiten Funktionseinheit kann dabei so gewählt werden, dass auf dem ersten Abschnitt die zweite Funktionseinheit betätigt wird und in der ersten Funktionseinheit bzw. in einem Übertragungsmittel von der Verteileinrichtung zur ersten Funktionseinheit ein Freilauf bzw. ein Spiel durchlaufen wird und dann auf dem zweiten Abschnitt die zweite Funktionseinheit entkoppelt und die erste Funktionseinheit betätigt wird. Insbesondere dann ergibt sich eine besonders bevorzugte Aufteilung des Betätigungswegs bzw. der Betätigungskräfte für die beiden Funktionselemente.

Gemäß Anspruch 2 kann die Betätigungseinrichtung die erste Funktionseinheit aufweisen, wobei die erste Funktionseinheit vorzugsweise ein Kraftfahrzeugschloss, insbesondere ein Hauptschloss, ist. Dann bildet die Betätigungsanordnung eine Kraftfahrzeugschlossanordnung. Gemäß Anspruch 3 kann die Betätigungseinrichtung die zweite Funktionseinheit aufweisen, wobei die zweite Funktionseinheit vorzugsweise ein Nebenschloss und/oder ein Türfeststeller ist. Dann ist vorzugsweise der zweite Ausgang mit einem Lösehebel des Nebenschlosses und/oder mit einem Lösehebel des Türfeststellers, insbesondere über das flexible Übertragungsmittel, gekoppelt. Eine solche Ausgestaltung der Betätigungseinrichtung ist besonders vorteilhaft, da aus Sicherheitsgründen in der Regel in der Betätigungskette zwischen Kraftfahrzeugschloss und Türgriff ein Spiel vorgesehen wird, ein solches Spiel ist für einen Türfeststeller und/oder ein Nebenschloss jedoch nicht notwendig. Zudem kann die vom Benutzer zur Betätigung der Funktionselemente notwendige Kraft so auf für ihn besonders komfortable Art und Weise über die Betätigungsbewegung hinweg verteilt werden.

Gemäß Anspruch 4 weist die Betätigungseinrichtung vorzugsweise ein weiteres flexibles Übertragungsmittel zur zumindest abschnittsweisen Übertragung der Betätigungsbewegung von dem ersten Ausgang zur ersten Funktionseinheit auf. Dabei koppelt vorzugsweise das weitere flexible Übertragungsmittel den ersten Ausgang mit dem Außenbetätigungshebel und/oder mit dem Innenbetätigungshebel des Kraftfahrzeugschlosses. Hierdurch wird eine besonders flexible Anordnung der Verteileinrichtung an der Kraftfahrzeugtür im Übrigen ermöglicht. Gemäß der Weiterbildung nach Anspruch 5 kann die Betätigungseinrichtung ferner einen Türgriff, insbesondere einen Türinnengriff und/oder einen Türaußengriff aufweisen, welcher auf den ersten Eingang der Verteileinrichtung wirkt. Hier und vorzugsweise wirkt der Türgriff über ein flexibles Übertragungsmittel auf den ersten Eingang. Auch diese Ausgestaltung und jeweils die Anbindung über flexible Übertragungsmittel erlauben eine sehr freie Anordnung der Verteileinrichtung an der Kraftfahrzeugtür im Übrigen.

In der Weiterbildung der Erfindung kann bzw. können ein zweiter Eingang (Anspruch 6) und/oder ein dritter Ausgang (Anspruch 7) vorgesehen sein. Gemäß Anspruch 8 erfolgt die zumindest abschnittsweise Übertragung der Betätigungsbewegung von dem dritten Ausgang zur ersten Funktionseinheit oder zu einer dritten Funktionseinheit. Ferner kann ein weiterer Türgriff, insbesondere ein Türinnengriff undloder ein Türaußengriff, vorgesehen sein, welcher auf den zweiten Eingang der Verteileinrichtung wirkt (Anspruch 9). Eine solche Ausgestaltung ermöglicht es, eine kompakte Verteileinrichtung sowohl für den Türinnengriff als auch den Türaußengriff zu schaffen.

Dabei kann bzw. können der erste Eingang und/oder der erste Ausgang durch ein erstes Koppelelement gebildet werden (Anspruch 10). Der zweite Ausgang kann vorzugsweise durch ein zweites Koppelelement gebildet werden (Anspruch 11). Der zweite Eingang und/oder der dritte Ausgang werden gemäß Anspruch 12 durch ein drittes Koppelelement gebildet. Dies ermöglicht eine besonders einfache und kostengünstige Realisierung der Verteileinrichtung.

In der Weiterbildung gemäß Anspruch 13 wird das zweite Koppelelement zum Entkoppeln vom ersten und/oder dritten Koppelelement aus dem Bewegungsweg des ersten Koppelelements bzw. des dritten Koppelelements bewegt. Dabei kann das zweite Koppelelement verschieblich ausgebildet oder als Hebel ausgebildet sein. Um die Funktionssicherheit der Betätigungseinrichtung zu steigern, kann die Verteileinrichtung eine Führung zum Führen von Bewegungen des ersten Koppelelements aufweisen und/oder es kann die Verteilereinrichtung eine Führung zum Führen von Bewegungen des zweiten Koppelelements aufweisen und/oder es kann die Verteileinrichtung eine Führung zum Führen von Bewegungen des dritten Koppelelements aufweisen. Insbesondere das zweite Koppelelement kann auch durch eine Führung und durch das erste bzw. dritte Koppelelement geführt werden.

Zum Schutz vor Umwelteinflüssen kann die Verteileinrichtung und/oder die erste Funktionseinheit und/oder die zweite Funktionseinheit ein Gehäuse aufweisen. Um eine besonders kompakte Konstruktion zu erreichen, kann das Gehäuse die Führung bzw. die Führungen für das erste und/oder das zweite und/oder das dritte Koppelelement bereitstellen.

Bei einer Kraftfahrzeugtür wird das eingangs genannte Problem durch die Merkmale von Anspruch 14 gelöst. Es ergeben sich die gleichen Vorteile, wie vorstehend in Verbindung mit der Betätigungseinrichtung beschrieben. Schließlich wird das eingangs beschriebene Problem verfahrensmäßig durch ein Verfahren gemäß Anspruch 15 gelöst. Dabei ist die Betätigungseinrichtung vorteilhafterweise wie beschrieben ausgebildet bzw. es werden vorzugsweise die in Verbindung mit der Betätigungseinrichtung beschriebenen Verfahrensschritte durchgeführt. Es ergeben sich die gleichen Vorteile, wie in Verbindung mit der Betätigungseinrichtung beschrieben.

Im Folgenden wird die Erfindung anhand einer lediglich Ausführungsbeispiele darstellenden Zeichnung näher erläutert. In der Zeichnung zeigt
- Fig. 1: in a) ein Kraftfahrzeug mit einer vorschlagsgemäßen Kraftfahrzeugtür und in b) die Kraftfahrzeugtür mit einer vorschlagsgemäßen Betätigungseinrichtung,
- Fig.2: in a) eine schematische, dreidimensionale Darstellung einer vorschlagsgemäßen Betätigungseinrichtung, in b) eine zweidimensionale Ansicht gemäß A aus Fig. 2a) vor Beginn der Betätigungsbewegung und in c) eine zweidimensionale Ansicht gemäß A aus Fig. 2a) am Ende der Betätigungsbewegung,
- Fig.3: in a) eine schematische, dreidimensionale Darstellung eines zweiten Ausführungsbeispiels einer vorschlagsgemäßen Betätigungseinrichtung, in b) eine zweidimensionale Ansicht gemäß A aus Fig. 3a) vor Beginn der Betätigungsbewegung und in c) eine zweidimensionale Ansicht gemäß A aus Fig. 3a) am Ende der Betätigungsbewegung und
- Fig.4: in a) ein drittes Ausführungsbeispiel einer vorschlagsgemäßen Betätigungseinrichtung in schematischer, dreidimensionaler Darstellung und b) ein viertes Ausführungsbeispiel einer vorschlagsgemäßen Betätigungseinrichtung in schematischer, dreidimensionaler Darstellung.

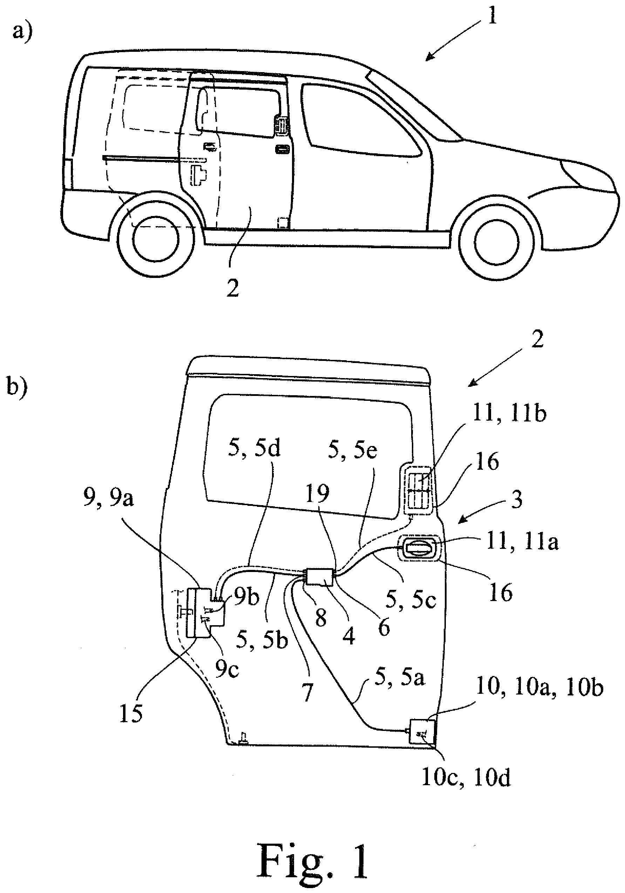

In der Fig. 1a ist ein Kraftfahrzeug 1 mit einer vorschlagsgemäßen Kraftfahrzeugtür 2 dargestellt. Bezüglich der Auslegung des Begriffs "Kraftfahrzeugtür" darf auf den einleitenden Teil der Beschreibung verwiesen werden. Insbesondere kann die Kraftfahrzeugtür 2 jegliche Art der eingangs genannten Kraftfahrzeugtüren 2 sein.

Die Kraftfahrzeugtür 2 aus der Fig. 1a ist in der Fig. 1b dargestellt. Sie weist eine vorschlagsgemäße Betätigungseinrichtung 3 auf. Die Betätigungseinrichtung 3 weist eine Verteileinrichtung 4 und ein flexibles Übertragungsmittel 5 auf.

Die Verteileinrichtung 4 weist einen ersten Eingang 6 und einen ersten Ausgang 7 sowie einen zweiten Ausgang 8 auf. Ferner ist sie zum Verteilen einer Betätigungsbewegung an zwei Funktionseinheiten 9, 10 ausgebildet. Hier und vorzugsweise sind die erste Funktionseinheit 9 und/oder die zweite Funktionseinheit 10 der Betätigungseinrichtung 3 zugeordnet. Hier und vorzugsweise ist die erste Funktionseinheit 9 ein Kraftfahrzeugschloss 9a und die zweite Funktionseinheit 10 ein Nebenschloss 10a und/oder ein Türfeststeller 10b.

Vorschlagsgemäß kann das flexible Übertragungsmittel 5 zur zumindest abschnittsweisen Übertragung der Betätigungsbewegung von der Verteileinrichtung 4 zu der ersten Funktionseinheit 9 oder zur zumindest abschnittsweisen Übertragung der Betätigungsbewegung von der Verteileinrichtung 4 zu der zweiten Funktionseinheit 10 ausgebildet sein. Im Ausführungsbeispiel und vorzugsweise ist ein Übertragungsmittel 5a zur zumindest abschnittsweisen Übertragung der Betätigungsbewegung von der Verteileinrichtung zu der zweiten Funktionseinheit 10 vorgesehen und ein weiteres Übertragungsmittel 5b zur zumindest abschnittsweisen Übertragung der Betätigungsbewegung von der Verteileinrichtung 4 zu der ersten Funktionseinheit 9.

Die der Erfindung zugrundeliegende Grundidee ist es nun, dass im montierten Zustand der Betätigungseinrichtung 3 auf einem ersten Abschnitt einer auf den ersten Eingang 6 der Verteileinrichtung 4 wirkenden Betätigungsbewegung zur abschnittsweisen Übertragung der Betätigungsbewegung an die zweite Funktionseinheit 10 der erste Eingang 6 mit dem zweiten Ausgang 8 gekoppelt ist oder gekoppelt wird, und, dass zu Beginn eines zweiten Abschnitts der Betätigungsbewegung der erste Eingang 6 und der zweite Ausgang 8 zur Unterbrechung der Übertragung der Betätigung der Betätigungsbewegung an die zweite Funktionseinheit 10 entkoppelt werden.

Hierdurch ist es möglich, eine Betätigungsbewegung in besonders vorteilhafter Weise auf die beiden Funktionseinheiten 9, 10 zu verteilen. Ist die erste Funktionseinheit 9 ein Kraftfahrzeugschloss 9a, insbesondere ein Hauptschloss, und die zweite Funktionseinheit 10 ein Türfeststeller 10b und/oder ein Nebenschloss 10a, kann durch eine Betätigungsbewegung auf einem ersten Abschnitt zunächst ein in dem Übertragungsmittel 5 und/oder dem Hauptschloss vorgesehenes Spiel durchlaufen werden, während der Türfeststeller 10b und/oder das Nebenschloss 10a bereits geöffnet bzw. gelöst wird, so dass auf dem zweiten Abschnitt der Betätigungsbewegung nach dem Entkoppeln des zweiten Funktionselements 10, also insbesondere des Türfeststellers 10b und/oder des Nebenschlosses 10a, keine Kraft mehr zur weiteren Verstellung der zweiten Funktionseinheit 10 aufgebracht werden muss und die Kraft zum Verstellen der ersten Funktionseinheit 9, also hier des Kraftfahrzeugschlosses 9a, verwendet werden kann. Hierdurch wird der nötige Kraftaufwand bzw. der nötige Betätigungsweg aufgrund einer höher zu wählenden Übersetzung reduziert. Dies führt zu einer Komforterhöhung für den Benutzer.

Entsprechend ist es so, dass im montierten Zustand der Betätigungseinrichtung 3 auf einem zweiten Abschnitt einer auf dem ersten Eingang 6 der Verteileinrichtung 4 wirkenden Betätigungsbewegung zur abschnittsweisen Übertragung der Betätigungsbewegung an die erste Funktionseinheit 9 der erste Eingang 6 mit dem ersten Ausgang 7 gekoppelt ist oder gekoppelt wird, und, dass im montierten Zustand der Betätigungseinrichtung 3 auf einem ersten Abschnitt einer auf den ersten Eingang 6 der Verteileinrichtung 4 wirkenden Betätigungsbewegung zur abschnittsweisen Übertragung der Betätigungsbewegung an die erste Funktionseinheit 9 der erste Eingang 6 mit dem ersten Ausgang 7 gekoppelt ist oder gekoppelt wird.

Wie vorstehend bereits beschrieben, weist die Betätigungseinrichtung 3 vorzugsweise die erste Funktionseinheit 9 auf. Besonders bevorzugt ist diese ein Kraftfahrzeugschloss 9a, insbesondere ein Hauptschloss. Es ist vorzugsweise in verschiedenen Schließzustände bringbar. Dies können insbesondere mindestens zwei oder drei der Schließzustände "entriegelt", "vertriegelt", "diebstahlgesichert" und/oder "kindergesichert" sein. In den Ausführungsbeispielen ist der erste Ausgang 7 mit einem Außenbetätigungshebel 9b des Kraftfahrzeugschlosses 9a gekoppelt.

Ferner weist die Betätigungseinrichtung 3 vorzugsweise die zweite Funktionseinheit 10 auf. Sie ist hier und vorzugsweise ein Nebenschloss 10a und/oder ein Türfeststeller 10b. Ein Nebenschloss 10a verriegelt im geschlossenen Zustand der Kraftfahrzeugtür 2 diese zusätzlich mit der Karosserie. Ein Türfeststeller 10b dient dem Halten der Kraftfahrzeugtür 2 in zumindest einer geöffneten, insbesondere ganz geöffneten, Stellung. Im Ausführungsbeispiel ist der zweite Ausgang 8 in einem Lösehebel 10c des Nebenschlosses 10a und/oder mit einem Lösehebel 10d des Türfeststellers 10b, insbesondere über das flexible Übertragungsmittel 5, 5a gekoppelt.

Zur zumindest abschnittsweisen Übertragung der Betätigungsbewegung von dem ersten Ausgang 6 zur ersten Funktionseinheit 9 weist die Betätigungseinrichtung 3 ein weiteres Übertragungsmittel 5b auf. Hier und vorzugsweise koppelt das weitere flexible Übertragungsmittel 5b den ersten Ausgang 7 mit dem Außenbetätigungshebel 9b oder gemäß einer alternativen Ausgestaltung mit dem Innenbetätigungshebel 9c des Kraftfahrzeugschlosses 9a.

Zur Erzeugung der Betätigungsbewegung weist die Betätigungseinrichtung 3 hier und vorzugsweise einen Türgriff 11, insbesondere einen Türinnengriff 11b und/oder einen Türaußengriff 11a auf, welcher auf den ersten Eingang 6 der Verteileinrichtung 4 wirkt. Vorzugsweise wirkt der Türgriff 11 über ein flexibles Übertragungsmittel 5, 5c auf den ersten Eingang 6.

In den Ausführungsbeispielen und vorzugsweise werden der erste Eingang 6 und der erste Ausgang 7 durch ein erstes Koppelelement 12 gebildet. Wie im Ausführungsbeispiel gezeigt, ist das erste Koppelelement 12 vorzugsweise einstückig ausgebildet. Besonders bevorzugt ist das Übertragungsmittel 5c am ersten Eingang 6 und das erste Koppelelement 12 und/oder das Übertragungsmittel 5b am ersten Ausgang 7 und das erste Koppelelement 12 einstückig ausgebildet, wie dies in allen Ausführungsbeispielen der Fall ist. In einer alternativen Ausgestaltung kann jedoch beispielsweise auch das Koppelelement 12 einstückig ausgebildet und das Übertragungsmittel 5b am ersten Ausgang 7 und/oder das Übertragungsmittel 5c am ersten Eingang 6 lösbar mit dem Koppelelement 12 verbunden sein. Die Verbindung zwischen dem ersten Koppelelement 12 und dem

Übertragungsmittel 5 bzw. den Übertragungsmitteln 5 kann dann beispielsweise als Schnappverbindung ausgestaltet sein.

Das erste Koppelelement 12 weist hier und vorzugsweise eine im Wesentlichen quaderförmige Gestalt auf. Alternativ kann das erste Koppelelement 12 jedoch beispielsweise auch eine zylindrische Gestalt aufweisen. Die Verteileinrichtung 4 weist eine Führung 13 zum Führen der Bewegung des ersten Koppelelements 12 auf. Hier und vorzugsweise wird die Führung 13 durch ein Gehäuse 14 bereitgestellt. Im Ausführungsbeispiel ist das Gehäuse das Gehäuse 14 der Verteileinrichtung 4. Die Verteileinrichtung 4 ist hier und vorzugsweise separat von dem ersten Funktionselement 9, separat von dem zweiten Funktionselement 10 und separat von dem Türgriff 11 angeordnet.

In einer alternativen, nicht gezeigten Ausgestaltung kann es jedoch auch vorgesehen sein, dass die Verteileinrichtung 4 einem Kraftfahrzeugschloss 9a zugeordnet ist. In diesem Fall ist es vorzugsweise so, dass die Verteileinrichtung 4 in einem Gehäuse 15 des Kraftfahrzeugschlosses 9a angeordnet ist. Dann kann das Gehäuse 15 des Kraftfahrzeugschlosses 9a die Führung bereitstellen.

Alternativ kann die Verteileinrichtung 4 auch in einem Gehäuse des Nebenschlosses 10a und/oder des Türfeststellers 10b angeordnet sein.

Ferner kann alternativ vorgesehen sein, dass die Verteileinrichtung 4 dem Türgriff 11 zugeordnet ist. In diesem Fall kann die Führung beispielsweise auch von einer Tragstruktur 16 des Türgriffs 11 bereitgestellt werden.

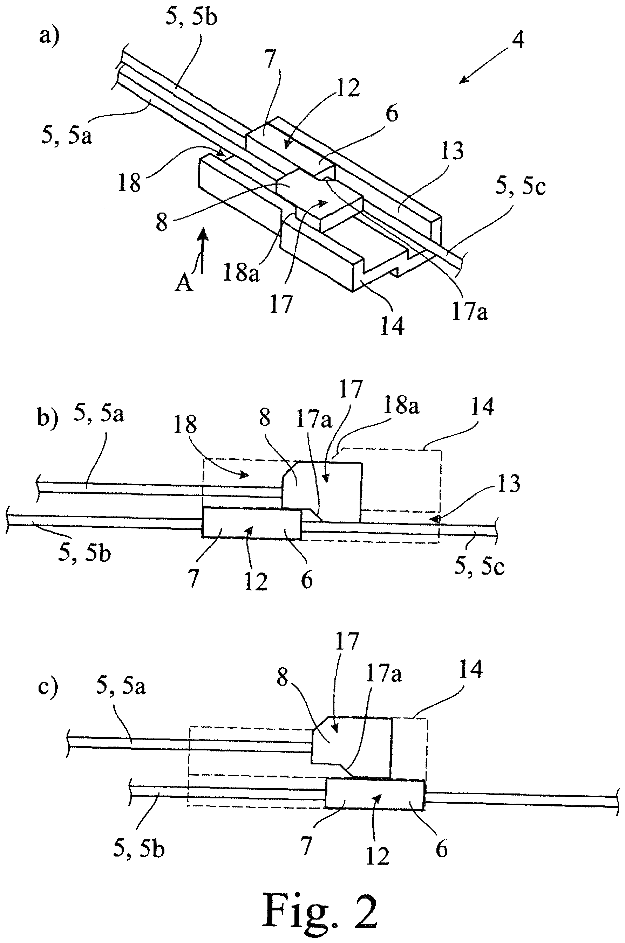

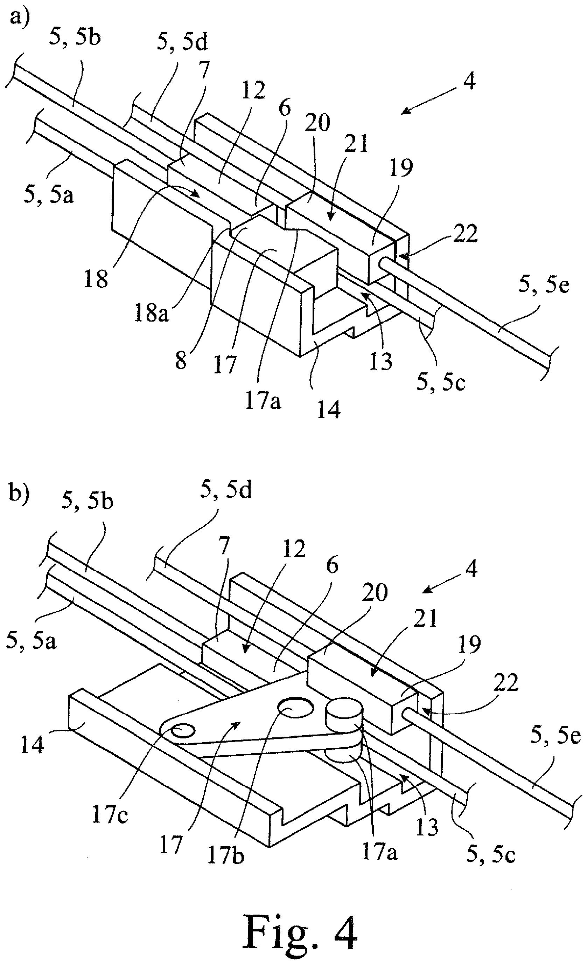

Der zweite Ausgang 8 wird durch ein zweites Koppelelement 17 gebildet. Vorzugsweise ist auch dieses einstückig ausgebildet. Insbesondere kann dieses auch einstückig mit dem Übertragungsmittel 5a am zweiten Ausgang 8 ausgebildet sein, wie dies zumindest in den Ausführungsbeispielen der Fig. 2 und 4a der Fall ist. Beispielsweise kann das zweite Koppelelement 17 jedoch auch lösbar mit dem Übertragungsmittel 5a verbunden sein, beispielsweise durch eine Schnappverbindung.

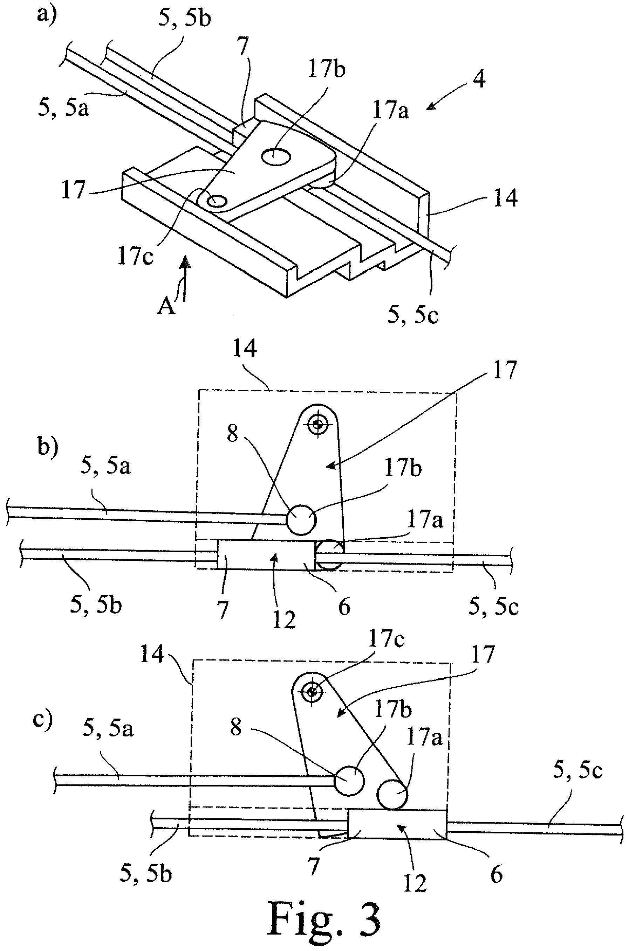

Darüberhinaus sind verschiedene Ausgestaltungen des Koppelelements 17 möglich. Hier und vorzugsweise ist das zweite Koppelelement 17 verschieblich (vgl. Fig.2 und 4a) und/oder hebelartig (vgl. Fig. 3 und 4b) ausgebildet.

Zum Entkuppeln weist das zweite Koppelelement 17 vorzugsweise eine Auslenkkontur 17a auf, welche zum Entkoppeln des zweiten Ausgangs 8 vom ersten Eingang 6 am ersten Koppelelement 12 abgleitet und hierdurch das zweite Koppelelement 17 von der Betätigungsbewegung entkoppelt.

Auch das zweite Koppelelement 17 kann eine Führung 18 aufweisen. Das zweite Koppelelement 17 wird hier und vorzugsweise von der Führung 18 und dem ersten Koppelelement 12 geführt. Wie in der Fig. 2 gezeigt, kann die Führung 18 einen Entkopplungsabschnitt 18a aufweisen, welcher ein Entkoppeln des zweiten Koppelelements 17 von dem ersten Koppelelement 12 ermöglicht.

Im Ausführungsbeispiel der Fig. 2 wirkt die Betätigungsbewegung auf den ersten Eingang 6. Das erste Koppelelement 12 legt entsprechend einen Betätigungsweg zurück. Auf dem ersten Betätigungsabschnitt der Betätigungsbewegung überträgt das erste Koppelelement 12 einen Abschnitt der Betätigungsbewegung auf das zweite Koppelelement 17. Wird der Entkopplungsabschnitt 18a erreicht, entkoppelt das zweite Koppelelement 17 vom ersten Koppelelement 12 durch ein Abgleiten der Auslenkkontur 17a. Hierbei wird das zweite Koppelelement 17 vorzugsweise zumindest auch quer zur Betätigungsbewegung bewegt. Es ergibt sich im Ergebnis vorzugsweise ein längerer Betätigungsweg für das erste Koppelelement 12 als für das zweite Koppelelement 17. Die Bewegung des zweiten Koppelelements 17 erfolgt hier vorzugsweise rein translatorisch.

Hier und vorzugsweise ist es ferner so, dass das zweite Koppelelement 17 nach dem Entkuppeln zumindest solange von dem ersten Koppelement 12 entkoppelt bleibt, bis das erste Koppelelement 12 wieder eine Bewegung entgegen der Betätigungsbewegung vollzieht, vorzugsweise, bis es in die Stellung der Entkopplung rückbewegt wurde.

Im Ausführungsbeispiel der Fig. 3 ist das zweite Koppelelement 17 nicht verschieblich, sondern hebelartig ausgebildet. Das hebelartige zweite Koppelelement 17 weist einen Koppelpunkt 17b auf, welcher den zweiten Ausgang 8 bildet. Drehbar gelagert ist es hier und vorzugsweise über einen Drehpunkt 17c am Gehäuse 14. Vorzugsweise ist der Koppelpunkt 17b dichter an der Drehachse des Koppelelements 17 angeordnet als die Auslenkkontur 17a. Dadurch wird eine Änderung der Übersetzung der Betätigungsbewegung ermöglicht. Diese kann zur Kraftanpassung bzw. Weganpassung der Betätigungsbewegung bei der Verteilung an das zweite Funktionselement 10 genutzt werden.

Die Auslenkkontur 17a wird hier und vorzugsweise durch einen zylindrischen Abschnitt gebildet. Wirkt nun eine Betätigungsbewegung auf den ersten Eingang 6, legt das erste Koppelelement 12 ebenfalls einen entsprechenden Betätigungsweg zurück. Auf dem ersten Betätigungsabschnitt der Betätigungsbewegung überträgt das erste Koppelelement 12 einen Abschnitt der Betätigungsbewegung auf das zweite Koppelelement 17 über die Auslenkkontur 17a. Diese ist hier und vorzugsweise als Stift ausgebildet. Das zweite hebelartig ausgebildete Koppelelement 17 wird ausgelenkt. Dabei gleitet die Auslenkkontur 17a an dem ersten Koppelelement 12 ab und entkoppelt das zweite Koppelelement 17 auf einem zweiten Abschnitt der Betätigungsbewegung. Auch hier bleibt das zweite Koppelelement 17 vorzugsweise zumindest solange vom ersten Koppelelement 12 entkoppelt, bis das erste Koppelelement 12 eine Bewegung entgegen der Betätigungsbewegung vollzieht.

Ferner kann die Betätigungsanordnung 3 auch einen zweiten Eingang 19 und/oder einen dritten Ausgang 20 aufweisen. Zwei Ausführungsbeispiele hierfür sind in der Fig. 4 gezeigt. Sie sind im Übrigen im Wesentlichen genauso ausgebildet wie die Betätigungsanordnungen der Ausführungsbeispiele der Fig. 2 und 3.

Im montierten Zustand der Betätigungseinrichtung 3 kann dann auf einem ersten Abschnitt einer auf den zweiten Eingang 19 der Verteileinrichtung 4 wirkenden Betätigungsbewegung zur abschnittsweisen Übertragung der Betätigungsbewegung an die zweite Funktionseinheit 10 der zweite Eingang 19 mit dem zweiten Ausgang 8 gekoppelt sein oder gekoppelt werden. Vorzugsweise wird dann zu Beginn eines zweiten Abschnitts der Betätigungsbewegung der zweite Eingang 19 und der zweite Ausgang 8 zur Unterbrechung der Übertragung der Betätigungsbewegung an die zweite Funktionseinheit 10 entkoppelt.

Besonders bevorzugt ist es gemäß dem dritten und vierten Ausführungsbeispiel (Fig. 4) so, dass die Verteileinrichtung 4 einen dritten Ausgang 20 aufweist und dass im montierten Zustand der Betätigungseinrichtung 3 auf einem ersten Abschnitt eine auf den zweiten Eingang 19 der Verteileinrichtung 4 wirkende Betätigungsbewegung zur abschnittweisen Übertragung der Betätigungsbewegung an die erste Funktionseinheit 10 und/oder an eine nicht gezeigte dritte Funktionseinheit der zweite Eingang 19 mit dem dritten Ausgang 20 gekoppelt ist oder gekoppelt wird. Zusätzlich oder alternativ kann im montierten Zustand der Betätigungseinrichtung 3 auf einen zweiten Abschnitt einer auf den zweiten Eingang 19 der Verteileinrichtung 4 bewirkenden Betätigungsbewegung zur abschnittweisen Übertragung der Betätigungsbewegung an die erste Funktionseinheit 9 und/oder eine dritte nicht gezeigte Funktionseinheit der zweite Eingang 19 mit dem dritten Ausgang 20 gekoppelt sein oder gekoppelt werden.

Zur zumindest abschnittweisen Übertragung der Betätigungsbewegung von dem dritten Ausgang 20 zur ersten Funktionseinheit 9 oder zur dritten Funktionseinheit weist die Betätigungseinrichtung 3 hier und vorzugsweise ein weiteres flexibles Übertragungsmittel 5d auf. Das weitere flexible Übertragungsmittel 5d koppelt hier und vorzugsweise den dritten Ausgang 20 mit dem Innenbetätigungshebel 9c oder dem Außenbetätigungshebel 9b des Kraftfahrzeugschlosses 9a.

Die Betätigungseinrichtung 3 weist hier und vorzugsweise einen weiteren Türgriff 11, insbesondere einen Türinnengriff 11b und/oder einen Türaußengriff 11a auf, welcher auf den zweiten Eingang 19 der Verteileinrichtung 4 wirkt. Der weitere Türgriff 11 wirkt hier über ein flexibles Betätigungselement 5e auf den zweiten Eingang 19 ein.

In den Ausführungsbeispielen der Fig. 4 wird bzw. werden der zweite Eingang 19 und/oder der dritte Ausgang 20 durch ein drittes Koppelelement 21 gebildet. Auch hier ist das dritte Koppelelement 21 einstückig ausgebildet.

Hinsichtlich der Ausgestaltung des dritten Koppelelements 21 und der am dritten Koppelelement 21 angreifenden Übertragungsmittel 5d, 5e wird auf die Ausführungen zum ersten Koppelelement 12 verwiesen. Vorzugsweise sind das erste Koppelelement 12 und das dritte Koppelelement 21 gleich ausgestaltet. Die Länge der an den Koppelelementen 12, 21 angreifenden Übertragungsmittel 5 kann sich jedoch unterscheiden.

Geführt wird das dritte Koppelelement 21 vorzugsweise durch eine Führung 22. Diese wird hier und vorzugsweise vom Gehäuse 14 ausgebildet. Bei einer auf den zweiten Eingang 19 wirkenden Betätigungsbewegung wird das zweite Koppelelement 17 hier und vorzugsweise durch die Führung 18 und das dritte Koppelelement 21 geführt.

Zum Entkoppeln des zweiten Ausgangs 8 vom ersten Eingang 6 und/oder zweiten Eingang 19 während des Beginns eines zweiten Abschnitts in der Betätigungsbewegung wird hier und vorzugsweise das zweite Koppelelement 17 vom ersten Koppelelement 12 und/oder dritten Koppelelement 21 aus dem Bewegungsweg des ersten Koppelelements 12 bzw. dritten Koppelelements 21 bewegt. Dies erfolgt vorzugsweise wie vorstehend bereits für die Ausführungsbeispiele der Figuren 2 und 3 in Zusammenhang mit dem ersten und zweiten Koppelelement 12, 17 beschrieben.

Vorzugsweise verlaufen die Betätigungsbewegungen des ersten und des dritten Koppelelements 12, 21 parallel. Die Abschnittsweise auf das zweite Koppelelement 17 übertragene Betätigungsbewegung kann vorzugsweise ebenfalls parallel zu der Betätigungsbewegung des ersten und/oder dritten Koppelelements 12, 21 verlaufen. Vorzugsweise verläuft die Betätigungsbewegung des zweiten Koppelements 17 jedoch nicht in einer gemeinsamen Ebenen mit den Betätigungsbewegungen des ersten und dritten Betätigungselements 12, 21.

Schließlich sei noch darauf hingewiesen, dass es sich bei den flexiblen Übertragungsmitteln 5, 5a, 5b, 5c, 5d, 5e hier und vorzugsweise um Bowdenzüge handelt. Es können jedoch beispielsweise auch Seile sein.

## Patentansprüche

1. Betätigungseinrichtung für eine Kraftfahrzeugtür (2) mit einer Verteileinrichtung (4) und mit einem flexiblen Übertragungsmittel (5, 5a-5e),
wobei die Verteileinrichtung (4) einen ersten Eingang (6) und einen ersten Ausgang (7) sowie einen zweiten Ausgang (8) aufweist und zum Verteilen einer Betätigungsbewegung an zwei Funktionseinheiten (9, 10) ausgebildet ist und wobei das flexible Übertragungsmittel (5, 5a-5e) zur zumindest abschnittsweisen Übertragung der Betätigungsbewegung von der Verteileinrichtung (4) zu der ersten Funktionseinheit (9) oder zur zumindest abschnittsweisen Übertragung der Betätigungsbewegung von der Verteileinrichtung (4) zu der zweiten Funktionseinheit (10) ausgebildet ist,
wobei im montierten Zustand der Betätigungseinrichtung (3) auf einem ersten Abschnitt einer auf den ersten Eingang (6) der Verteileinrichtung (4) wirkenden Betätigungsbewegung zur abschnittsweisen Übertragung der Betätigungsbewegung an die zweite Funktionseinheit (10) der erste Eingang (6) mit dem zweiten Ausgang (8) gekoppelt ist oder gekoppelt wird,
wobei zu Beginn eines zweiten Abschnitts der Betätigungsbewegung der erste Eingang (6) und der zweite Ausgang (8) zur Unterbrechung der Übertragung der Betätigungsbewegung an die zweite Funktionseinheit (10) entkoppelt werden,
**dadurch gekennzeichnet,**
**dass** im montierten Zustand der Betätigungseinrichtung (3) auf einem zweiten Abschnitt einer auf den ersten Eingang der Verteileinrichtung (4) wirkenden Betätigungsbewegung zur abschnittsweisen Übertragung der Betätigungsbewegung an die erste Funktionseinheit (9) der erste Eingang (6) mit dem ersten Ausgang (7) gekoppelt ist oder gekoppelt wird und
**dass** im montierten Zustand der Betätigungseinrichtung (3) auf einem ersten Abschnitt einer auf den ersten Eingang (6) der Verteileinrichtung (4) wirkenden Betätigungsbewegung zur abschnittsweisen Übertragung der Betätigungsbewegung an die erste Funktionseinheit (9) der erste Eingang (6) mit dem ersten Ausgang (7) gekoppelt ist oder gekoppelt wird.

2. Betätigungseinrichtung nach Anspruch 1, **dadurch gekennzeichnet, dass** die Betätigungseinrichtung (3) die erste Funktionseinheit (9) aufweist, vorzugsweise, dass die erste Funktionseinheit (9) ein Kraftfahrzeugschloss (9a), insbesondere ein Hauptschloss, ist, vorzugsweise, dass der erste Ausgang (7) mit einem Außenbetätigungshebel (9b) und/oder Innenbetätigungshebel (9c) des Kraftfahrzeugschlosses (9a) gekoppelt ist.

3. Betätigungseinrichtung nach einem der vorhergehenden Ansprüche, **dadurch gekennzeichnet, dass** die Betätigungseinrichtung (3) die zweite Funktionseinheit (10) aufweist, vorzugsweise, dass die zweite Funktionseinheit (10) ein Nebenschloss (10a) und/oder ein Türfeststeller (10b) ist, vorzugsweise, dass der zweite Ausgang (8) mit einem Lösehebel (10c) des Nebenschlosses (10a) und/oder mit einem Lösehebel (10d) des Türfeststellers (10b), insbesondere über das flexible Übertragungsmittel (5, 5a), gekoppelt ist.

4. Betätigungseinrichtung nach einem der vorhergehenden Ansprüche, **dadurch gekennzeichnet, dass** die Betätigungseinrichtung (3) ein weiteres flexibles Übertragungsmittel (5, 5b) zur zumindest abschnittsweisen Übertragung der Betätigungsbewegung von dem ersten Ausgang (7) zur ersten Funktionseinheit (9) aufweist, vorzugsweise, dass das weitere flexible Übertragungsmittel (5, 5b) den ersten Ausgang (7) mit dem Außenbetätigungshebel (9b) oder Innenbetätigungshebel (9c) des Kraftfahrzeugschlosses (9a) koppelt.

5. Betätigungseinrichtung nach einem der vorhergehenden Ansprüche, **dadurch gekennzeichnet, dass** die Betätigungseinrichtung (3) einen Türgriff (11), insbesondere einen Türinnengriff (11b) und/oder einen Türaußengriff (11a), aufweist, welcher auf den ersten Eingang (6) der Verteileinrichtung (4) wirkt, vorzugsweise, dass der Türgriff (11) über ein flexibles Übertragungsmittel (5, 5c) auf den ersten Eingang (6) wirkt.

6. Betätigungseinrichtung nach einem der vorhergehenden Ansprüche, **dadurch gekennzeichnet, dass** die Verteileinrichtung (4) einen zweiten Eingang (19) aufweist und dass im montierten Zustand der Betätigungseinrichtung auf einem ersten Abschnitt einer auf den zweiten Eingang (19) der Verteileinrichtung (4) wirkenden Betätigungsbewegung zur abschnittsweisen Übertragung der Betätigungsbewegung an die zweite Funktionseinheit (10) der zweite Eingang (19) mit dem zweiten Ausgang (8) gekoppelt ist oder gekoppelt wird,
vorzugsweise, dass zu Beginn eines zweiten Abschnitts der Betätigungsbewegung der erste Eingang (6) und der zweite Ausgang (8) zur Unterbrechung der Übertragung der Betätigungsbewegung an die zweite Funktionseinheit (10) entkoppelt werden.

7. Betätigungseinrichtung nach Anspruch 6, **dadurch gekennzeichnet, dass** die Verteileinrichtung (4) einen dritten Ausgang (20) aufweist und dass im montierten Zustand der Betätigungseinrichtung (3) auf einem ersten Abschnitt einer auf den zweiten Eingang (19) der Verteileinrichtung (4) wirkenden Betätigungsbewegung zur abschnittsweisen Übertragung der Betätigungsbewegung an die erste Funktionseinheit (9) und/oder eine dritte Funktionseinheit der zweite Eingang mit dem dritten Ausgang (20) gekoppelt ist oder gekoppelt wird, und/oder,
dass im montierten Zustand der Betätigungseinrichtung (3) auf einem zweiten Abschnitt einer auf den zweiten Eingang (19) der Verteileinrichtung (4) wirkenden Betätigungsbewegung zur abschnittsweisen Übertragung der Betätigungsbewegung an die erste Funktionseinheit (9) und/oder eine dritte Funktionseinheit der zweite Eingang (19) mit dem dritten Ausgang (20) gekoppelt ist oder gekoppelt wird.

8. Betätigungseinrichtung nach Anspruch 7, **dadurch gekennzeichnet, dass** die Betätigungseinrichtung (3) ein flexibles Übertragungsmittel (5, 5d) zur zumindest abschnittsweisen Übertragung der Betätigungsbewegung von dem dritten Ausgang (20) zur ersten Funktionseinheit (9) oder zur dritten Funktionseinheit aufweist, vorzugsweise, dass das weitere flexible Übertragungsmittel (5, 5d) den dritten Ausgang (20) mit dem Innenbetätigungshebel (9c) oder dem Außenbetätigungshebel (9b) des Kraftfahrzeugschlosses (9a) koppelt.

9. Betätigungseinrichtung nach einem der Ansprüche 6 bis 8, **dadurch gekennzeichnet, dass** die Betätigungseinrichtung (3) einen weiteren Türgriff (11), insbesondere einen Türinnengriff (11b) und/oder einen Türaußengriff (11a), aufweist, welcher auf den zweiten Eingang (19) der Verteileinrichtung (4) wirkt, vorzugsweise, dass der weitere Türgriff (11) über ein flexibles Übertragungsmittel (5, 5d) auf den zweiten Eingang (19) wirkt.

10. Betätigungseinrichtung nach einem der vorhergehenden Ansprüche, **dadurch gekennzeichnet, dass** der erste Eingang (6) und/oder der erste Ausgang (7) durch ein erstes Koppelelement (12) gebildet wird bzw. werden, vorzugsweise, dass das erste Koppelelement (12) einstückig ausgebildet ist, weiter vorzugsweise, dass Übertragungsmittel (5, 5c) am ersten Eingang (6) und das erste Koppelelement (12) und/oder dass Übertragungsmittel (5, 5b) am ersten Ausgang (7) und das erste Koppelelement (12) einstückig ausgebildet sind.

11. Betätigungseinrichtung nach einem der vorhergehenden Ansprüche, **dadurch gekennzeichnet, dass** der zweite Ausgang (8) durch ein zweites Koppelelement (17) gebildet wird, vorzugsweise, dass das zweite Koppelelement (17) einstückig ausgebildet ist, weiter vorzugsweise, dass Übertragungsmittel (5, 5a) am zweiten Ausgang (8) und das zweite Koppelelement (17) einstückig ausgebildet sind.

12. Betätigungseinrichtung nach einem der Ansprüche 6 bis 11, **dadurch gekennzeichnet, dass** der zweite Eingang (19) und/oder der dritte Ausgang (20) durch ein drittes Koppelelement (21) gebildet wird bzw. werden, vorzugsweise, dass das dritte Koppelelement (21) einstückig ausgebildet ist, weiter vorzugsweise, dass Übertragungsmittel (5, 5e) am zweiten Eingang (19) und das dritte Koppelelement (21) und/oder dass Übertragungsmittel (5, 5d) am dritten Ausgang (20) und das dritte Koppelelement (21) einstückig ausgebildet sind.

13. Betätigungseinrichtung nach Anspruch 11 oder 12, **dadurch gekennzeichnet, dass** das zweite Koppelelement (17) zum Entkoppeln vom ersten und/oder dritten Koppelelement (12, 21) aus dem Bewegungsweg des ersten Koppelelements (12) bzw. des dritten Koppelelements (21) bewegt wird, vorzugsweise, dass das zweite Koppelelement (17) verschieblich ausgebildet ist oder hebelartig ausgebildet ist.

14. Kraftfahrzeugtür mit einer Betätigungseinrichtung (3) nach einem der vorhergehenden Ansprüche.

15. Verfahren zum Betätigen einer Betätigungseinrichtung (3) nach einem der Ansprüche 1 bis 13 mit einer Verteileinheit (4) aufweisend einen ersten Eingang (6) und einen ersten Ausgang (7) sowie einen zweiten Ausgang (8),
bei dem eine Betätigungsbewegung auf den ersten Eingang (6) der Verteileinrichtung (4) wirkt und auf einem ersten Abschnitt der Betätigungsbewegung der erste Eingang (6) mit einem zweiten Ausgang (8) gekoppelt ist oder gekoppelt wird und zu Beginn eines zweiten Abschnitts der Betätigungsbewegung der erste Eingang (6) und der zweite Ausgang (8) zur Unterbrechung der Übertragung der Betätigungsbewegung an die zweite Funktionseinheit (10) entkoppelt werden.

## Claims

1. Activation installation for a motor vehicle door (2), having a distribution installation (4) and a flexible transmission means (5, 5a-5e),
wherein the distribution installation (4) has a first input (6) and a first output (7) as well as a second output (8), and is configured for distributing an activation movement to two functional units (9, 10), and
wherein the flexible transmission means (5, 5a-5e) is configured for transmitting the activation movement at least in portions from the distribution installation (4) to the first functional unit (9), or for transmitting the activation movement at least in portions from the distribution installation (4) to the second functional unit (10),
**wherein**
in the assembled state of the activation installation (3), on a first portion of an activation movement that acts on the first input (6) of the distribution installation (4), the first input (6) for transmitting the activation movement in portions to the second functional unit (10) is coupled or is to be coupled to the second output (8),
wherein at the commencement of a second portion of the activation movement, the first input (6) and the second output (8) for interrupting the transmission of the activation movement to the second functional unit (10) are decoupled, **characterized in that** in the assembled state of the activation installation (3), on a second portion of an activation movement that acts on the first input of the distribution installation (4), the first input (6) for transmitting the activation movement in portions to the first functional unit (9) is coupled or is to be coupled to the first output (7), and **in that** in the assembled state of the activation installation (3), on a first portion of an activation movement that acts on the first input (6) of the distribution installation (4), the first input (6) for transmitting the activation movement in portions to the first functional unit (9) is coupled or is to be coupled to the first output (7).

2. Activation installation according to Claim 1, **characterized in that** the activation installation (3) has the first functional unit (9), preferably in that the first functional unit (9) is a motor vehicle lock (9a), in particular a primary lock, preferably **in that** the first output (7) is coupled to an external activation lever (9b) and/or an internal activation lever (9c) of the motor vehicle lock (9a).

3. Activation installation according to either of the preceding claims, **characterized in that** the activation installation (3) has the second functional unit (10), preferably **in that** the second functional unit (10) is a secondary lock (10a) and/or a door arrester (10b), preferably **in that** the second output (8), in particular by way of the flexible transmission means (5, 5a), is coupled to a release lever (10c) of the secondary lock (10a) and/or to a release lever (10d) of the door arrester (10b).

4. Activation installation according to one of the preceding claims, **characterized in that** the activation installation (3) has a further flexible transmission means (5, 5b) for transmitting the activation movement at least in portions from the first output (7) to the first functional unit (9), preferably **in that** the further flexible transmission means (5, 5b) couples the first output (7) to the external activation lever (9b) or to the internal activation lever (9c) of the motor vehicle lock (9a).

5. Activation installation according to one of the preceding claims, **characterized in that** the activation installation (3) has a door handle (11), in particular an internal door handle (11b) and/or an external door handle (11a), which acts on the first input (6) of the distribution installation (4), preferably **in that** the door handle (11) acts on the first input (6) by way of a flexible transmission means (5, 5c).

6. Activation installation according to one of the preceding claims, **characterized in that** the distribution installation (4) has a second input (19), and **in that** in the assembled state of the activation installation, on a first portion of an activation movement that acts on the second input (19) of the distribution installation (4), the second input (19) for transmitting the activation movement in portions to the second functional unit (10) is coupled or is to be coupled to the second output (8),
preferably **in that** at the commencement of a second portion of the activation movement, the first input (6) and the second output (8) for interrupting the transmission of the activation movement to the second functional unit (10) are decoupled.

7. Activation installation according to Claim 6, **characterized in that** the distribution installation (4) has a third output (20), and **in that** in the assembled state of the activation installation (3), on a first portion of an activation movement that acts on the second input (19) of the distribution installation (4), the second input for transmitting the activation movement in portions to the first functional unit (9) and/or to a third functional unit is coupled or is to be coupled to the third output (20), and/or **in that**
in the assembled state of the activation installation (3), on a second portion of an activation movement that acts on the second input (19) of the distribution installation (4), the second input (19) for transmitting the activation movement in portions to the first functional unit (9) and/or to a third functional unit is coupled or is to be coupled to the third output (20).

8. Activation installation according to Claim 7, **characterized in that** the activation installation (3) has a flexible transmission means (5, 5d) for transmitting the activation movement at least in portions from the third output (20) to the first functional unit (9) or to the third functional unit, preferably **in that** the further flexible transmission means (5) couples the third output (20) to the internal activation lever (9c) or to the external activation lever (9b) of the motor vehicle lock (9a).

9. Activation installation according to one of Claims 6 to 8, **characterized in that** the activation installation (3) has a further door handle (11), in particular an internal door handle (11b) and/or an external door handle (11a), which acts on the second input (19) of the distribution installation (4), preferably **in that** the further door handle (11) acts on the second input (19) by way of a flexible transmission means (5, 5d).

10. Activation installation according to one of the preceding claims, **characterized in that** the first input (6) and/or the first output (7) are/is formed by a first coupling element (12), preferably **in that** the first coupling element (12) is configured so as to be integral, furthermore preferably **in that** the transmission means (5, 5c) at the first input (6) and the first coupling element (12) are configured so as to be integral, and/or **in that** the transmission means (5, 5b) at the first output (7) and the first coupling element (12) are configured so as to be integral.

11. Activation installation according to one of the preceding claims, **characterized in that** the second output (8) is formed by a second coupling element (17), preferably **in that** the second coupling element (17) is configured so as to be integral, furthermore preferably **in that** the transmission means (5, 5a) at the second output (8) and the second coupling element (17) are configured so as to be integral.

12. Activation installation according to one of Claims 6 to 11, **characterized in that** the second input (19) and/or the third output (20) are/is formed by a third coupling element (21), preferably **in that** the third coupling element (21) is configured so as to be integral, furthermore preferably **in that** the transmission means (5, 5e) at the second input (19) and the third coupling element (21) are configured so as to be integral, and/or **in that** the transmission means (5, 5d) at the third output (20) and the third coupling element (21) are configured so as to be integral.

13. Activation installation according to Claim 11 or 12, **characterized in that** the second coupling element (17) for decoupling from the first and/or the third coupling element (12, 21) is moved out of the movement path of the first coupling element (12) or of the third coupling element (21), preferably **in that** the second coupling element (17) is configured so as to be displaceable or configured in the manner of a lever.

14. Motor vehicle door having an activation installation (3) according to one of the preceding claims.

15. Method for activating an activation installation (3) according to one of Claims 1 to 13 having a distribution unit (4) having a first input (6) and a first output (7) as well as a second output (8), in which method an activation movement acts on the first input (6) of the distribution installation (4), and on a first portion of the activation movement the first input (6) is coupled or is to be coupled to a second output (8), and at the commencement of a second portion of the activation movement the first input (6) and the second output (8) for interrupting the transmission of the activation movement to the second functional unit (10) are decoupled.

## Revendications

1. Dispositif d'actionnement pour une porte de véhicule automobile (2), comprenant un dispositif de distribution (4) et un moyen de transfert flexible (5, 5a-5e),
le dispositif de distribution (4) présentant une première entrée (6) et une première sortie (7) ainsi qu'une deuxième sortie (8) et étant réalisé pour distribuer un mouvement d'actionnement à deux unités fonctionnelles (9, 10),
et le moyen de transfert flexible (5, 5a-5e) étant réalisé pour transférer au moins en partie le mouvement d'actionnement du dispositif de distribution (4) à la première unité fonctionnelle (9) ou pour transférer au moins en partie le mouvement d'actionnement du dispositif de distribution (4) à la deuxième unité fonctionnelle (10),
dans l'état monté du dispositif d'actionnement (3), sur une première portion d'un mouvement d'actionnement agissant sur la première entrée (6) du dispositif de distribution (4) pour le transfert partiel du mouvement d'actionnement à la deuxième unité fonctionnelle (10), la première entrée (6) étant accouplée à la deuxième sortie (8) ,
au début d'une deuxième portion du mouvement d'actionnement, la première entrée (6) et la deuxième sortie (8) étant désaccouplées pour interrompre le transfert du mouvement d'actionnement à la deuxième unité fonctionnelle (10) ,
**caractérisé en ce que**
dans l'état monté du dispositif d'actionnement (3), sur une deuxième portion d'un mouvement d'actionnement agissant sur la première entrée du dispositif de distribution (4) pour le transfert partiel du mouvement d'actionnement à la première unité fonctionnelle (9) , la première entrée (6) est accouplée à la première sortie (7) et
**en ce que** dans l'état monté du dispositif d'actionnement (3), sur une première portion d'un mouvement d'actionnement agissant sur la première entrée (6) du dispositif de distribution (4) pour le transfert partiel du déplacement d'actionnement à la première unité fonctionnelle (9), la première entrée (6) est accouplée à la première sortie (7) .

2. Dispositif d'actionnement selon la revendication 1, **caractérisé en ce que** le dispositif d'actionnement (3) présente la première unité fonctionnelle (9) , de préférence **en ce que** la première unité fonctionnelle (9) est une serrure de véhicule automobile (9a) , en particulier une serrure principale, de préférence **en ce que** la première sortie (7) est accouplée à un levier d'actionnement extérieur (9b) et/ou à un levier d'actionnement intérieur (9c) de la serrure de véhicule automobile (9a) .

3. Dispositif d'actionnement selon l'une quelconque des revendications précédentes, **caractérisé en ce que** le dispositif d'actionnement (3) présente la deuxième unité fonctionnelle (10), de préférence en ce que la deuxième unité fonctionnelle (10) est une serrure auxiliaire (10a) et/ou un dispositif de blocage de porte (10b), de préférence **en ce que** la deuxième sortie (8) est accouplée à un levier de desserrage (10c) de la serrure auxiliaire (10a) et/ou à un levier de desserrage (10d) du dispositif de blocage de porte (10b), en particulier par le biais du moyen de transfert flexible (5, 5a) .

4. Dispositif d'actionnement selon l'une quelconque des revendications précédentes, **caractérisé en ce que** le dispositif d'actionnement (3) présente un moyen de transfert flexible supplémentaire (5, 5b) pour le transfert au moins partiel du mouvement d'actionnement de la première sortie (7) à la première unité fonctionnelle (9) , de préférence **en ce que** le moyen de transfert flexible supplémentaire (5, 5b) accouple la première sortie (7) au levier d'actionnement extérieur (9b) ou au levier d'actionnement intérieur (9c) de la serrure de véhicule automobile (9a).

5. Dispositif d'actionnement selon l'une quelconque des revendications précédentes, **caractérisé en ce que** le dispositif d'actionnement (3) présente une poignée de porte (11) , en particulier une poignée de porte intérieure (11b) et/ou une poignée de porte extérieure (11a) , qui agit sur la première entrée (6) du dispositif de distribution (4), de préférence **en ce que** la poignée de porte (11) agit sur la première entrée (6) par le biais d'un moyen de transfert flexible (5, 5c).

6. Dispositif d'actionnement selon l'une quelconque des revendications précédentes, **caractérisé en ce que** le dispositif de distribution (4) présente une deuxième entrée (19) et **en ce que** dans l'état monté du dispositif d'actionnement, sur une première portion d'un mouvement d'actionnement agissant sur la deuxième entrée (19) du dispositif de distribution (4), pour le transfert partiel du mouvement d'actionnement à la deuxième unité fonctionnelle (10), la deuxième entrée (19) est accouplée à la deuxième sortie (8),
de préférence **en ce qu'**au début d'une deuxième portion du mouvement d'actionnement, la première entrée (6) et la deuxième sortie (8) sont désaccouplées pour interrompre le transfert du mouvement d'actionnement à la deuxième unité fonctionnelle (10).

7. Dispositif d'actionnement selon la revendication 6, **caractérisé en ce que** le dispositif de distribution (4) présente une troisième sortie (20) et **en ce que** dans l'état monté du dispositif d'actionnement (3), sur une première portion d'un mouvement d'actionnement agissant sur la deuxième entrée (19) du dispositif de distribution (4) pour le transfert partiel du mouvement d'actionnement à la première unité fonctionnelle (9) et/ou à une troisième unité fonctionnelle, la deuxième entrée est accouplée à la troisième sortie (20),
et/ou
**en ce que** dans l'état monté du dispositif d'actionnement (3), sur une deuxième portion d'un mouvement d'actionnement agissant sur la deuxième entrée (19) du dispositif de distribution (4) pour le transfert partiel du mouvement d'actionnement à la première unité fonctionnelle (9) et/ou à une troisième unité fonctionnelle, la deuxième entrée (19) est accouplée à la troisième sortie (20).

8. Dispositif d'actionnement selon la revendication 7, **caractérisé en ce que** le dispositif d'actionnement (3) présente un moyen de transfert flexible (5, 5d) pour le transfert au moins partiel du mouvement d'actionnement de la troisième sortie (20) à la première unité fonctionnelle (9) ou à la troisième unité fonctionnelle, de préférence **en ce que** le moyen de transfert flexible supplémentaire (5, 5d) accouple la troisième sortie (20) au levier d'actionnement intérieur (9c) ou au levier d'actionnement extérieur (9b) de la serrure de véhicule automobile (9a).

9. Dispositif d'actionnement selon l'une quelconque des revendications 6 à 8, **caractérisé en ce que** le dispositif d'actionnement (3) présente une poignée de porte supplémentaire (11), en particulier une poignée de porte intérieure (11b) et/ou une poignée de porte extérieure (11a), qui agit sur la deuxième entrée (19) du dispositif de distribution (4), de préférence **en ce que** la poignée de porte supplémentaire (11) agit par le biais d'un moyen de transfert flexible (5, 5d) sur la deuxième entrée (19).

10. Dispositif d'actionnement selon l'une quelconque des revendications précédentes, **caractérisé en ce que** la première entrée (6) et/ou la première sortie (7) sont formées par un premier élément d'accouplement (12), de préférence **en ce que** le premier élément d'accouplement (12) est réalisé d'une seule pièce, plus préférablement **en ce que** des moyens de transfert (5, 5c) au niveau de la première entrée (6) et le premier élément d'accouplement (12) sont réalisés d'une seule pièce et/ou **en ce que** des moyens de transfert (5, 5b) au niveau de la première sortie (7) et le premier élément d'accouplement (12) sont réalisés d'une seule pièce.

11. Dispositif d'actionnement selon l'une quelconque des revendications précédentes, **caractérisé en ce que** la deuxième sortie (8) est formée par un deuxième élément d'accouplement (17), de préférence **en ce que** le deuxième élément d'accouplement (17) est réalisé d'une seule pièce, plus préférablement **en ce que** des moyens de transfert (5, 5a) au niveau de la deuxième sortie (8) et le deuxième élément d'accouplement (17) sont réalisés d'une seule pièce.

12. Dispositif d'actionnement selon l'une quelconque des revendications 6 à 11, **caractérisé en ce que** la deuxième entrée (19) et/ou la troisième sortie (20) sont formées par un troisième élément d'accouplement (21), de préférence **en ce que** le troisième élément d'accouplement (21) est réalisé d'une seule pièce, plus préférablement **en ce que** des moyens de transfert (5, 5e) au niveau de la deuxième entrée (19) et le troisième élément d'accouplement (21) sont réalisés d'une seule pièce et/ou **en ce que** des moyens de transfert (5, 5d) au niveau de la troisième sortie (20) et le troisième élément d'accouplement (21) sont réalisés d'une seule pièce.

13. Dispositif d'actionnement selon la revendication 11 ou 12, **caractérisé en ce que** le deuxième élément d'accouplement (17) est déplacé pour désaccoupler le premier et/ou le troisième élément d'accouplement (12, 21) hors de la voie de déplacement du premier élément d'accouplement (12) ou du troisième élément d'accouplement (21), de préférence **en ce que** le deuxième élément d'accouplement (17) est réalisé de manière déplaçable ou est réalisé sous forme de levier.

14. Porte de véhicule automobile comprenant un dispositif d'actionnement (3) selon l'une quelconque des revendications précédentes.

15. Procédé d'actionnement d'un dispositif d'actionnement (3) selon l'une quelconque des revendications 1 à 13, comprenant une unité de distribution (4) présentant une première entrée (6) et une première sortie (7) ainsi qu'une deuxième sortie (8),
dans lequel un mouvement d'actionnement agit sur la première entrée (6) du dispositif de distribution (4) et, sur une première portion du mouvement d'actionnement, la première entrée (6) est accouplée à une deuxième sortie (8) et, au début d'une deuxième portion du mouvement d'actionnement, la première entrée (6) et la deuxième sortie (8) sont désaccouplées pour interrompre le transfert du mouvement d'actionnement à la deuxième unité fonctionnelle (10) .
